(19) Europäisches Patentamt / European Patent Office / Office européen des brevets

(11) **EP 2 330 439 B1**

(12) **FASCICULE DE BREVET EUROPEEN**

(45) Date de publication et mention
de la délivrance du brevet:
**26.04.2017 Bulletin 2017/17**

(51) Int Cl.:
***G01S 17/93*** *(2006.01)*

(21) Numéro de dépôt: **10193462.8**

(22) Date de dépôt: **02.12.2010**

(54) **Système de détection d'obstacle pour véhicule**

Hinderniserkennungssystem für Fahrzeug

Obstacle-detection system for a vehicle

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2009 FR 0958677**

(43) Date de publication de la demande:
**08.06.2011 Bulletin 2011/23**

(73) Titulaire: **VALEO VISION**
**93012 Bobigny (FR)**

(72) Inventeur: **Robert, Caroline**
**75017, PARIS (FR)**

(56) Documents cités:
| | |
|---|---|
| **EP-A1- 1 859 990** | **EP-A1- 2 020 595** |
| **EP-A1- 2 085 790** | **WO-A1-2007/071032** |
| **WO-A1-2008/154736** | **US-A1- 2005 180 149** |
| **US-A1- 2009 032 712** | |

**Description**

La présente invention porte sur un système et sur un procédé de détection d'obstacle pour véhicule.

Elle trouve son application en particulier dans le secteur automobile.

Afin de rendre plus sûre et confortable la conduite des véhicules automobiles, des solutions ont été développées pour détecter la présence d'obstacles mobiles ou fixes, en particulier dans les zones peu visibles pour le conducteur, tel que dans l'angle mort des rétroviseurs latéraux des voitures. Ces solutions, permettent ainsi d'alerter le conducteur lorsqu'un obstacle pénètre dans l'une de ces zones difficilement visibles.

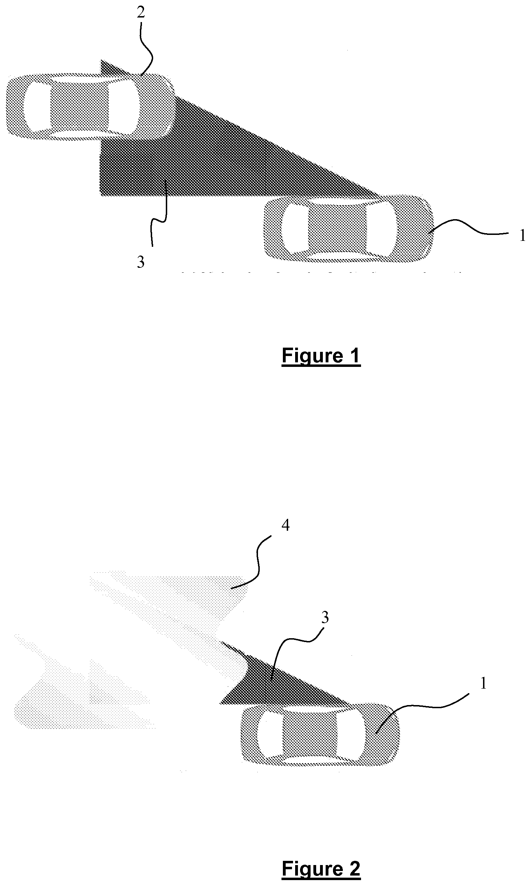

Ces solutions font généralement intervenir des capteurs émettant un faisceau lasers ou un faisceau radar. Lorsqu'un obstacle se trouve sur le chemin du faisceau, ce dernier est réfléchi au moins en partie et peut être analysé. L'analyse du faisceau réfléchi permet de déduire la présence d'un obstacle dans la zone à surveiller. La figure 1 illustre un exemple d'application dans lequel un véhicule 1 détecte un autre véhicule 2 pénétrant dans le faisceau 3.

La puissance des faisceaux émis est soumise à des seuils maximaux dictés par des normes de sécurité. Des faisceaux de puissance trop élevée sont notamment susceptibles de perturber voir d'endommager l'oeil d'un individu atteint par le faisceau.

Ces solutions s'avèrent globalement satisfaisantes lorsque les conditions atmosphériques et l'environnement du véhicule permettent une bonne propagation du faisceau. Cependant, lorsque des perturbations atmosphériques, telles que du brouillard, de la pluie ou des fumées empêchent une bonne propagation du faisceau, les obstacles relativement éloignés ne sont alors plus détectés. La figure 2 illustre un exemple dans lequel la portée du faisceau 3 est considérablement réduite. Le véhicule 1 équipé du capteur ne peut alors pas détecter un autre véhicule situé dans la zone non couverte 4.

Le document WO2008/154736 décrit un système de détection d'obstacle pour véhicule, dans lequel le faisceau émis est modulé en fonction des conditions de visibilité.

Le document EP 1 859 990 décrit un système de détection permettant, quand il fait nuit, de signaler à un chauffeur la présence d'un gros objet (par exemple un poids lourds) dans l'espace autour de son véhicule.

Le document US 2005/180149 décrit un système de détection pour véhicule qui vise à éviter qu'une personne (par exemple un piéton et/ou le chauffeur d'un véhicule croissant) regarde directement dans le faisceau de détection.

Le document US 2009/032712 décrit un système dans lequel, pour détecter la présence d'un obstacle, une comparaison est faite entre un faisceau réfléchi et un faisceau de référence.

Le document WO 2007/071032 décrit un système permettant de faire la distinction entre des sources de lumières. Ce document prévoit de doter chaque source d'une sorte de « signature » permettant de faire cette distinction.

Le document EP 2 085 790 décrit un système de détection pour véhicule dans lequel la puissance du faisceau de détection est réduite au cas où il risque d'endommager les yeux d'un chauffeur suivant ce véhicule.

Il existe donc un besoin consistant à fournir un système de détection d'obstacle pour véhicule qui permette une bonne détection en présence de perturbations atmosphériques.

A cet effet, on prévoit selon l'invention un système de détection d'obstacle pour véhicule comprenant des moyens d'émission d'un faisceau lumineux, des premiers moyens de détection, agencés pour recevoir par réflexion une partie au moins du faisceau de sorte à détecter la présence d'un obstacle rencontré par le faisceau, des seconds moyens de détection agencés pour détecter et quantifier une baisse de visibilité dans l'environnement du véhicule, des moyens de commande configurés pour adapter la puissance dudit faisceau en fonction de la baisse de visibilité. Le système comprend au moins un même capteur comprenant les premiers et les seconds moyens de détection, les seconds moyens de détection étant agencés pour détecter et quantifier une baisse de visibilité par analyse de ladite partie au moins du faisceau reçue par réflexion.

Ainsi, un même capteur est utilisé pour assurer à la fois la détection des obstacles et la détection de baisses de visibilité. L'invention ne nécessite donc pas d'avoir deux capteurs. Elle permet par conséquent de limiter considérablement les coûts et la simplicité des systèmes de détection.

De manière facultative, l'invention pourra en outre présenter au moins l'une quelconque des caractéristiques suivantes :

les premiers et les seconds moyens de détection forment un seul et même moyen de réception du faisceau.

le faisceau lumineux présente une longueur d'onde comprise entre 780 et 1100 nanomètres et plus particulièrement entre 800 et 950 nanomètres. Cet intervalle de longueur d'onde s'est avéré particulièrement efficace pour détecter avec précision une baisse de visibilité. En outre, cela évite de créer des effets lumineux intempestifs en présence d'un phénomène perturbateur de visibilité, et de gêner ainsi d'autres conducteurs.

les moyens d'émission du faisceau comprennent au moins une diode électroluminescente, encore appelée DEL ou LED. Cela permet de limiter encore les coûts. En outre, la robustesse et la durée de vie du système en sont améliorées.

- les moyens d'émission sont intégrés au capteur. Comme cela sera précisé par la suite le système peut ainsi être constitué d'un ensemble monobloc particulièrement compact et peu encombrant.

- les seconds moyens de détection sont agencés pour détecter une baisse de visibilité en présence de perturbations atmosphérique telles que du brouillard ou de la pluie ou des chutes de neige ou des fumées ou des projections d'eau.
- les moyens d'émission comprennent au moins une source lumineuse et le système est agencé pour augmenter le flux lumineux en provenance de la source lorsqu'une baisse de visibilité est détectée par les seconds moyens de détection.
- le flux lumineux est augmenté par les deuxièmes moyens de détection de la valeur de la baisse de visibilité quantifiée par rapport à une utilisation par bonne visibilité, de manière ne pas dépasser un seuil de sécurité oculaire. Ce seuil de sécurité est souvent fixé par une norme légale. Lors de la conception, on peut cependant choisir ce seuil en dessous pour plus de sûreté. Par conséquent, quelle que soit la baisse de visibilité, la distance de détection demeure sensiblement constante tout en maintenant l'énergie du faisceau en dessous d'un niveau dangereux pour l'oeil humain.
- le système est agencé pour diminuer le rapport cyclique d'émission de la source de façon à permettre l'émission d'un flux plus important ponctuellement lorsqu'une baisse de visibilité est détectée par les seconds moyens de détection. Cette alternative permet d'augmenter le flux lumineux lorsque la source atteint sa limite supérieure d'émission. Ces deux modes d'augmentation du faisceau lumineux peuvent être combinés.
- on peut par exemple définir pour le faisceau une luminance émise $L_{Emax}$ telle que :

$$L_{Emax} = \frac{K_{es}}{C_a \cdot t^A} \cdot (1 - e^{-k \cdot \frac{de}{V}})$$

avec :

- de = distance séparant un oeil des moyens d'émission
- t = durée d'exposition en secondes
- $C_a$ = angle apparent de la source en milliradians
- $K_{es}$ = constante issue de normes de sécurité pour garantir l'intégrité des yeux
- k = coefficient de Koschmieder
- V = distance de visibilité
- A = constante issue des normes de sécurité oculaire.

- le système comporte une unité de contrôle agencée pour générer au moins un signal de détection en fonction d'une combinaison du faisceau lumineux réfléchi en cas d'obstacle et d'un faisceau de référence et pour comparer la modulation d'au moins un signal de détection généré avec une information de référence. Comme on va le voir en détail par la suite, un tel système présente l'avantage de se baser sur un signal de détection qui présente une modulation caractérisante spécifique d'un phénomène perturbateur de visibilité et donc de déterminer la présence d'un tel phénomène.
- la combinaison est composée d'une sommation des deux faisceaux, d'un décalage de phase et d'un décalage d'amplitude de ces deux faisceaux. Cela permet d'obtenir de façon simple deux signaux de détection.
- le signal de détection correspond un décalage de phase entre le faisceau lumineux réfléchi et le faisceau de référence. Ce signal de détection permet notamment de déterminer une distance entre un obstacle et le véhicule.
- l'information de référence est un seuil de modulation déterminé. Grâce à ce seuil de modulation, il est par exemple possible de faire la différence entre la présence d'une gerbe d'eau gênante pour la visibilité, et l'absence d'une gerbe d'eau avec une atmosphère sèche ou humide mais non gênante pour la visibilité.
- l'information de référence est un seuil de modulation en amplitude. Cette information est facile à comparer car la modulation en amplitude d'un signal de détection peut être directement lue sur le signal lui-même sans traitement préalable particulier.
- le capteur est agencé pour détecter et quantifier la baisse de visibilité par analyse de la quantité de lumière émise par le capteur et rétro diffusée par le milieu.
- le système selon l'invention est agencé pour détecter un obstacle fixe ou mobile dans un angle mort du véhicule. Il peut ainsi être agencé pour détecter un autre véhicule dans l'angle mort d'un rétroviseur latéral. De manière alternative, il est agencé pour détecter un obstacle situé en arrière du véhicule lorsque le véhicule recule.
- le système selon l'invention comprend des moyens agencés pour avertir le conducteur lorsque la présence d'un obstacle est détectée. De manière alternative, il comprend des moyens agencés pour agir sur un système de freinage lorsque la présence d'un obstacle est détectée.

L'invention a également pour objet une portière de véhicule ou un capot avant de véhicule ou un capot arrière de véhicule ou un rétroviseur équipé d'un système de détection selon l'une quelconque des caractéristiques précédentes. L'invention a également pour objet un véhicule comprenant un système de détection selon l'une quelconque des caractéristiques précédentes.

Dans le cadre de l'invention, on prévoit en outre un procédé de détection d'un obstacle, comprenant les étapes suivantes :

- on émet un faisceau lumineux,
- on reçoit par réflexion une partie au moins du faisceau de sorte à détecter la présence d'un obstacle rencontré par le faisceau,
- on détecte et on quantifie une baisse de visibilité dans l'environnement du véhicule,
- on adapte la puissance dudit faisceau en fonction de la baisse de visibilité détectée,
- on détecte la présence d'un obstacle et une baisse de visibilité par un même capteur et on analyse ladite partie au moins du faisceau reçue par réflexion de manière à détecter la présence de la perturbation atmosphérique.

Avantageusement ce procédé met en oeuvre un système tel que décrit précédemment.

L'invention a également pour objet un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

D'autres caractéristiques, buts et avantages de la présente invention apparaîtront à la lecture de la description détaillée qui va suivre, et en regard des dessins annexés, donnés à titre d'exemples non limitatifs et sur lesquels :

La figure 1 est un schéma représentant un exemple de système connu de détection existant par bonne visibilité.

La figure 2 est un schéma illustrant le système de la figure 1 par visibilité réduite.

La figure 3 est un schéma représentant un exemple de système selon l'invention par bonne visibilité.

La figure 4 est un schéma de la figure 3 par visibilité réduite

La figure 5 représente un diagramme d'un mode de réalisation non limitatif du procédé de détection selon l'invention.

La figure 6 est un schéma montrant notamment l'émission d'un faisceau lumineux qui est réfléchi sur un obstacle selon le procédé de la Fig. 5.

La figure 7 est un relevé d'un signal de détection établi par le procédé selon la Fig. 5, le signal de détection étant représentatif de l'absence de phénomène perturbateur de visibilité et d'obstacle.

La figure 8 est un relevé d'un signal de détection établi par le procédé selon la Fig. 5, le signal de détection étant représentatif de l'absence de phénomène perturbateur de visibilité et de la présence d'un obstacle.

La figure 9 est un relevé d'un signal de détection établi par le procédé selon la Fig. 5, le signal de détection étant représentatif de la présence d'un phénomène perturbateur de visibilité et de l'absence d'un obstacle.

La figure 10 est un relevé d'un signal de détection établi par le procédé selon la Fig. 5, le signal de détection étant représentatif de la présence d'un phénomène perturbateur de visibilité et de la présence d'un obstacle.

La figure 11 est un schéma du dispositif de détection permettant la mise en oeuvre du procédé de la Fig. 5.

L'invention va maintenant être décrite en référence aux figures 1 à 11.

Le système selon l'invention comporte des moyens d'émission d'un faisceau lumineux. Avantageusement, les moyens d'émission comprennent une source lumineuse telle qu'une diode. Ce type de source lumineuse induit un coût de revient limité, présente une bonne robustesse et une longue durée de vie.

Le système comporte également un capteur comportant des premiers moyens de détection agencés pour détecter la présence d'un obstacle sur le chemin du faisceau. A cet effet, le système est configuré pour que le capteur récupère par réflexion une partie au moins du faisceau lorsque ce dernier se réfléchit sur un obstacle ayant pénétré dans une zone à surveiller. Le capteur analyse le faisceau réfléchi et en déduit la présence de l'obstacle.

On peut ainsi détecter un obstacle dans une zone visuellement non accessible au conducteur. Un exemple d'utilisation particulièrement avantageux est la détection d'un obstacle dans les angles morts d'un véhicule, notamment dans l'angle mort latéral gauche comme l'illustrent les figures 1 à 4.

On précise que le terme obstacle désigne aussi bien un obstacle mobile tel qu'un véhicule automobile (voiture, camion, moto etc.), un piéton, un animal, qu'un obstacle fixe tel qu'un véhicule à l'arrêt, un muret, un pylône etc.

La nature des obstacles détectés dépendra en grande partie de l'application donnée au capteur. Différents exemples d'application seront mentionnés par la suite.

La portée de la détection est directement liée à la puissance lumineuse émise. Plus cette puissance est élevée plus la portée de détection est grande.

Cependant, la puissance lumineuse du faisceau doit être définie de sorte à respecter les normes de sécurité oculaire. Il faut donc trouver un compromis entre distance de visibilité et respect des normes de sécurité.

En outre, la présence de phénomènes perturbateurs de visibilité tend à réduire considérablement la portée de la détection.

Les phénomènes perturbateurs de visibilité peuvent être dus à du brouillard, de la pluie, des chutes de neige, de la fumée. Ils peuvent également être induits par les projections d'eau à l'arrière de véhicule lorsque la chaussée est mouillée. Ces projections sont habituellement désignées écume.

Ces phénomènes perturbateurs absorbent une partie de la puissance lumineuse émise. Le faisceau ne peut alors pas atteindre un obstacle ou peut ne plus être suffisamment réfléchi pour que le capteur détecte l'obstacle.

Les figures 1 et 2 illustrent les différences de fonctionnement respectivement par bonne visibilité et par visibilité réduite.

Par bonne visibilité, le véhicule 2 est détecté par le capteur du véhicule 1 lorsqu'il pénètre dans la zone de surveillance balayée par le faisceau 3. Sur l'exemple de la figure 2 illustrant une utilisation par faible visibilité, la portée du faisceau 3 est considérablement réduite. Le capteur du véhicule 1 ne peut alors détecter aucun obstacle 2 pénétrant dans la zone non couverte 4 située au delà de la portée du faisceau 3.

A titre d'exemple, par temps de fort brouillard induisant une distance de visibilité de 50 mètres, l'absorption du faisceau lumineux est d'environ 45 % sur une distance de 10 mètres. En effet, conformément à la loi de Koschmieder le coefficient linéique de l'atmosphère est de 3,91 / 50 = 0,0782 m$^{-1}$. Le coefficient de transmission sur 10 mètres est alors de e$^{-0,0782 \times 10}$ = 45 %. En considérant l'aller retour du faisceau dans le brouillard, on en déduit que la distance maximale de détection d'obstacle passe d'une valeur de 10 mètres à 6,2 mètres. Cela représente une baisse de 38 % de la distance de détection, ce qui réduit considérablement l'efficacité du système de détection.

Pour palier cette réduction de la distance de détection, le système selon l'invention prévoit des seconds moyens de détection agencés pour détecter une baisse de visibilité ainsi que des moyens de commande agencés pour adapter la puissance émise en fonction de la baisse de visibilité détectée.

Plus particulièrement, l'invention prévoit de surintensifier le flux lumineux lorsqu'une partie au moins du faisceau est absorbée par des perturbations. Par conséquent, quelle que soit la baisse de visibilité, la distance de détection demeure sensiblement constante.

Avantageusement, les deuxièmes moyens de détection sont conformés pour quantifier la baisse de visibilité. Ils permettent ainsi aux moyens de commande de déterminer la mesure dans laquelle le flux lumineux doit être augmenté par rapport à une utilisation par bonne visibilité et ceci, afin de ne pas dépasser les normes de sécurité oculaire.

La manière dont le système identifie et quantifie la baisse de visibilité sera décrite en détail dans la partie intitulée : « description détaillée d'un exemple de capteur selon l'invention ».

La sécurité et le confort du conducteur sont donc préservés et le respect des normes de sécurité oculaire pour les personnes avoisinant le véhicule est respecté.

Afin de surintensifier l'intensité émise par les moyens d'émission, l'invention prévoit deux modes de réalisation alternatifs ou cumulables :

- on augmente le flux en provenance de la source. Typiquement on augmente la tension d'alimentation de la diode si cela est possible sans pour autant endommager la diode.
- on allume d'autres sources supplémentaires.
- on réduit le rapport cyclique de la diode de façon à générer un flux émis plus important ponctuellement. Ce mode de réalisation présente pour avantage d'obtenir une surintensification du flux lorsque la limite d'émission en continu de la source est atteinte.

De manière particulièrement avantageuse, les deuxièmes moyens de détection sont intégrés au capteur. Ainsi, le système comprend un capteur commun comprenant les moyens de détection d'obstacle et les moyens de détection d'une baisse de visibilité.

Le capteur est agencé pour recevoir par réflexion une partie au moins du faisceau ayant rencontré un obstacle. Cette partie au moins de faisceau réfléchi est reçue par le capteur et analysée par les premiers moyens de détection et par les seconds moyens de détection.

C'est donc à partir d'un même faisceau que sont détectés les obstacles et les baisses de visibilité.

Une structure détaillé d'un système selon l'invention sera décrite dans la partie intitulée : « description détaillée d'un exemple de capteur selon l'invention ».

Par rapport au système faisant intervenir un capteur de faisceau laser et une caméra, l'invention présente une complexité et un coût significativement réduits.

De manière préférée, la source lumineuse émet dans le domaine infra rouge ou dans le proche infra rouge. Plus particulièrement elle émet dans l'intervalle 780 nanomètres - 1100 nanomètres. Les faisceaux générés ne sont donc pas visibles à l'oeil nu par les conducteurs. Leur conduite n'est pas perturbée. En outre, bien qu'invisibles à l'oeil, ces longueurs d'ondes présentent l'avantage d'être visibles par des technologies classiques et donc à bas-coûts.

Avantageusement, la diode émet une lumière pulsée. Cela permet de générer un flux lumineux important, du moins temporairement, tout en respectant les normes de sécurité oculaire. En effet, les seuils maximaux d'émission dépendent en grande partie de la puissance reçue ainsi que du temps d'exposition en continu. Plus le temps d'exposition est court, plus le niveau d'exposition maximal permis est élevé.

De manière préférée, les premiers moyens de détection, en plus de détecter la présence d'un obstacle, déterminent la distance séparant l'obstacle du véhicule équipé du système.

On va maintenant décrire une méthode pour surintensifier le faisceau en cas de perturbations atmosphériques de sorte à compenser l'absorption d'une partie du faisceau et à conserver une distance de détection sensiblement constante à celle obtenue par bonne visibilité.

On fixe une distance $D_{max}$ souhaitée de détection par beau temps.

On détermine la distance de visibilité V. Cette distance est déterminée par les seconds moyens de détection du capteur.

On détermine le coefficient d'absorption linéique de l'atmosphère S, avec, conformément à la loi de Koschmieder,

$$S = \frac{k}{V} \text{ avec } k = \text{constante}.$$

On considère le temps de réponse du système t.

On considère l'angle apparent de la source $C_a$.

On se place pour l'exemple dans le cas particulier où la source émet entre 780 et 1400nm et où le temps d'exposition t est compris entre 10μs et 10s.

On calcule alors la luminance maximale $L_R$ reçue pour respecter les normes de sécurité :

$$L_R = \frac{K_{es}}{C_a \cdot t^A}$$

Avec $K_{es}$ = constante issue des normes de sécurité pour garantir l'intégrité d'un oeil atteint par le faisceau.

A = constante issue des normes de sécurité pour garantir l'intégrité d'un oeil atteint par le faisceau.

On considère une distance minimale de entre la source et l'oeil d'un individu qui pourrait être atteint par la source.

On calcule l'atténuation $A_{tt}$ % de la luminance à la distance « de » de la source, telle que $A_{tt}\% = 1 - e^{-(S \times de)}$

On calcule la luminance maximale permise $L_{Emax}$ émise par la source telle que :

$$L_{Emax} = L_R \times A_{tt}) \text{ soit}$$

$$L_{Emax} = \frac{K_{es}}{C_a \cdot t^A} \cdot (1 - e^{-k \cdot \frac{de}{V}})$$

L'augmentation de la distance de détection par rapport à une détection sans compensation de réduction due à la baisse de visibilité serait alors de $\Delta L$ tel que :

$$\frac{1}{\sqrt{\Delta L}} = e^{-S\Delta D} - \frac{\Delta D}{D_{maxbrouillard} \sqrt{\Delta L}}$$

Avec, $D_{maxbrouillard}$ défini par :

$$\frac{e^{-2S \, Dmaxbrouillard}}{D^2_{maxbrouillard}} = \frac{1}{D^2_{max}}$$

Avec D$_{max}$ = distance maximale de détection par bonne visibilité.

A titre d'exemple non limitatif pour illustrer le fonctionnement de l'invention par fort brouillard, considérons les paramètres suivants :

Distance de visibilité : V = 50 mètres. Cette distance de visibilité correspond à un fort brouillard.

k = 3,91

C$_a$ = 100 mrad

K$_{es}$ = 5.10$^7$ cette constante est issue de la norme suivante: directive européenne 2006/25/CE.

A = 0,25

de = 1,5 mètres. Cette distance correspond à la distance minimale estimée entre une source lumineuse située sur le véhicule et le conducteur d'un autre véhicule ou un piéton.

t = 10 millisecondes

La modulation de l'intensité du faisceau est effectuée en temps réel afin d'être adaptée rapidement à toute variation de visibilité.

En particulier, la fréquence de modulation de la source doit être suffisamment élevée pour éviter tout risque oculaire en sortie abrupte de nappe de brouillard.

Si une telle modulation n'est pas atteignable avec l'électronique utilisée, on peut limiter la surintensification lumineuse de telle sorte que la durée de l'émission de transition entre la zone de faible visibilité et la zone de bonne visibilité couplée à l'intensité lumineuse respecte les normes de sécurité oculaire.

Par exemple, si on est capable d'opérer une modulation de l'intensité lumineuse en t = 10 millisecondes, il faut alors considérer que l'intensité maximale permise est celle prévue pour une impulsion de 10 millisecondes.

On obtient alors :

$$L_R = \frac{K_{es}}{C_a \cdot t^A} = 1\ 581\ 183\ W\ /\ (m^2\ sr)$$

Avec cette visibilité, l'atténuation A$_{tt}$ % est de :

$$A_{tt} = 1 - e^{-(\frac{3,91}{50} \cdot 1,5)} = 11\%$$

On en déduit la puissance maximale autorisée après surintensification :

$$L_{Emax} = 1\ 581\ 183 \times 1,11 = 1\ 777\ 922\ W\ /\ (m^2\ sr)$$

Cette surintensification de la luminance permet d'augmenter de 2,73 mètres la distance maximale de détection par temps de brouillard. Cette augmentation permettrait de passer par temps de brouillard d'une détection de 6,2 mètres sans surintensification à une distance de détection de 8,93 mètres avec surintensification.

En surintensifiant le faisceau pour compenser son absorption due aux perturbations atmosphériques, on regagne ainsi une partie substantielle de la distance de détection réduite à cause de ces perturbations.

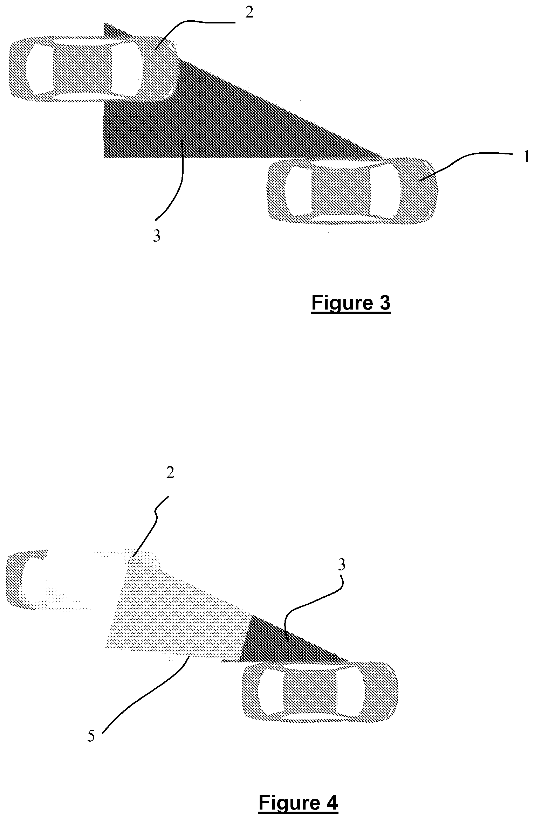

L'exemple de la figure 3 illustre une détection par bonne visibilité. La figure 4 illustre une détection par faible visibilité. Sur cette dernière figure, le faisceau 3 est surintensifié suite à la détection de la baisse de visibilité et grâce aux moyens de commande. La portée 5 du faisceau est augmentée et la distance de détection est améliorée.

Bien que l'exemple précédent concerne en premier lieu la détection de véhicules 2 pénétrant dans l'angle mort d'un rétroviseur latéral, le capteur selon l'invention peut être localisé à d'autres emplacements du véhicule. Ainsi, il peut être localisé à l'arrière pour détecter des véhicules s'approchant de près ou pour détecter un obstacle lors du recul du véhicule. Il peut également être localisé sur un rétroviseur, sur une portière, sur un capot avant ou encore sur un capot arrière etc. Il peut être localisé du côté conducteur ou du côté passager. Il peut équiper une voiture, un camion ou un deux roues.

Il peut également être utilisé pour détecter des éléments en avant du véhicule tels que des véhicules suivis, des panneaux routiers etc.

Par rapport aux solutions mettant en jeu une caméra, l'invention présente un coût considérablement réduit.

L'invention peut être utilisée pour signaler au conducteur la présence d'un obstacle, par l'intermédiaire d'un signal visuel ou sonore par exemple.

L'invention peut également être utilisée pour influencer le comportement du véhicule. Elle peut encore servir à agir sur un système de freinage en particulier lorsqu'un véhicule est détecté à proximité immédiate du véhicule équipé de l'invention. L'invention peut également être utilisée pour confronter la détection qu'elle opère avec d'autres systèmes de détection. Il est alors possible d'affiner un taux de confiance lié à une détection de sorte à confirmer ou infirmer la détection.

Un mode de réalisation non limitatif de capteur selon l'invention va maintenant être détaillé.

Ce mode de réalisation décrit un premier système de détection et de quantification d'un phénomène perturbateur de visibilité. Ce premier exemple s'applique de préférence aux phénomènes perturbateurs considérés comme non homogènes. Tel est le cas par exemple des gerbes ou paquets d'eau projetés par les roues d'un véhicule.

Un second exemple non limitatif sera ensuite détaillé. Ce second exemple s'appliquera de préférence aux phénomènes perturbateurs homogènes tels que le brouillard, la fumée, des averses de neiges ou de pluie, un ou des nuages de poussière.

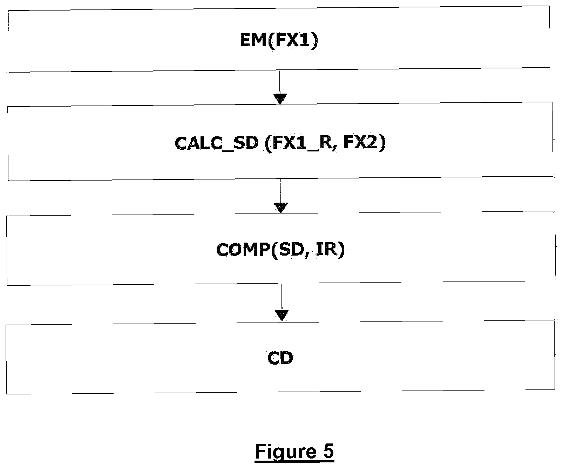

La description du premier exemple fait référence aux figures 5 à 11. Elle portera en premier lieu sur le procédé permettant de détecter et de quantifier une baisse de visibilité tout en détectant la présence d'un obstacle à proximité du véhicule. En second lieu, cette description portera sur la structure du capteur et ces différents composants.

Le capteur selon l'invention est agencé pour mettre en oeuvre les étapes suivantes, illustrées en figure 5, afin de détecter la présence d'un phénomène perturbateur de visibilité :

- Emettre un faisceau lumineux FX1 pour éclairer à l'arrière du véhicule (étape EM(FX1) illustrée à la Fig. 5), le faisceau lumineux pouvant être réfléchi par un obstacle;
- Générer au moins un signal de détection SD en fonction d'une combinaison du faisceau lumineux réfléchi FX1_R en cas d'obstacle et d'un faisceau de référence FX2 (étape CALC_SD(FX1_R, FX2) illustrée à la Fig. 5) ; et
- Comparer la modulation d'au moins un signal de détection généré SD avec une information de référence IR (étape COMP(SD, IR) illustrée à la Fig. 5).

Les étapes sont décrites en détail ci-après.

Dans une première étape 1), on émet un faisceau lumineux FX1 pouvant être réfléchi par un corps réfléchissant se trouvant sur le chemin du faisceau FX1.

Un corps réfléchissant peut être :

- un obstacle, tel que défini précédemment (véhicule, piéton, muret, plot etc.) ou
- un phénomène perturbateur de visibilité ou objet dit «non solide» ou «mou» tel qu'une gerbe d'eau générée par les roues du véhicule, du brouillard, de la pluie, de la neige, des fumées etc.
- une combinaison d'un obstacle «solide» et d'un phénomène perturbateur de visibilité, par exemple un véhicule suiveur et une gerbe d'eau G1 générée en raison d'une route mouillée.

On notera qu'une gerbe d'eau est composée d'une pluralité de paquets d'eau.

La génération du faisceau lumineux FX1 est effectuée par une source lumineuse SRC1 intégrée dans un capteur CAPT. La source et le capteur sont décrits plus loin.

Le faisceau FX1 ainsi émis est réfléchi par tout obstacle solide (véhicule, mur, piéton, etc.) et/ou tout phénomène perturbateur de visibilité (eau, brouillard etc.) vers un véhicule V1 et le faisceau réfléchi FX1_R résultant revient en direction de la source émettrice SRC1 et est perçu par un récepteur RCV. Ce faisceau réfléchi FX1_R est déformé par l'obstacle ou le phénomène perturbateur de visibilité et déphasé par rapport au faisceau émis FX1.

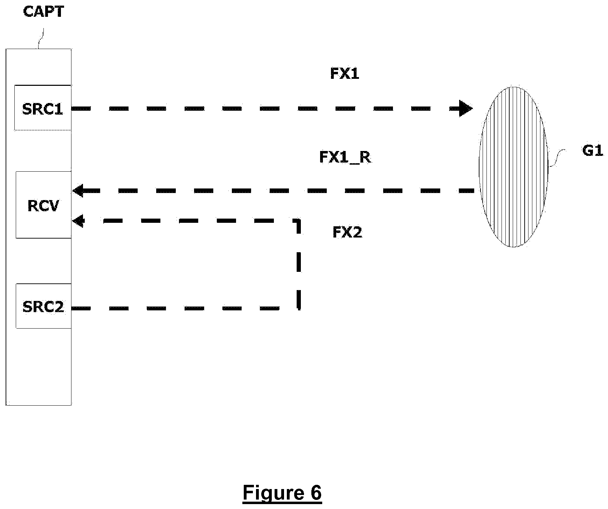

La Fig. 6 montre un faisceau FX1 émis à partir d'une source SRC1, le faisceau réfléchi résultant FX1_R est reçu par le récepteur RCV. La Fig. 6 montre également un faisceau de référence FX2 dont l'utilité est détaillée ci-après.

Dans une deuxième étape 2), on génère au moins un signal de détection SD en fonction d'une combinaison du faisceau lumineux réfléchi FX1_R en cas d'obstacle ou de phénomène perturbateur de visibilité et d'un faisceau de référence FX2.

L'observation d'un phénomène perturbateur de visibilité tel qu'une gerbe d'eau révèle une forte hétérogénéité des paquets d'eau qui la composent, liée aux turbulences aérodynamiques et hydrodynamiques. Cette hétérogénéité est instable dans le temps et avec une variabilité fonction complexe de la vitesse du véhicule et à l'environnement (épaisseur de la lame d'eau sur la route, nature du revêtement...). La vitesse d'évolution des paquets d'eau est lente comparée au temps de réaction d'un capteur CAPT. Il est donc possible avec le capteur CAPT (décrit plus loin) d'observer une variation de signaux représentative des évolutions des paquets d'eau. Ces signaux sont les signaux de détection SD.

La génération du signal de détection SD est effectuée de la manière suivante.

Un deuxième faisceau lumineux FX2 est émis par une deuxième source émettrice SCR2 dite compensatrice et envoyée directement en entrée du récepteur RCV sans être réfléchi par un passage d'obstacle ou de phénomène perturbateur de visibilité. Le deuxième faisceau FX2 est du même type que le premier faisceau FX1, à savoir à infrarouge.

Le faisceau réfléchi FX1_R et le faisceau de référence FX2 sont combinés. Dans un mode de réalisation non limitatif, la combinaison repose sur une sommation de ces deux signaux et un décalage en phase et un décalage en amplitude de ces deux signaux de manière à obtenir un signal nul. Les signaux de détection SD sont représentatifs du décalage de phase et du décalage d'amplitude. On obtient ainsi un signal de détection de distance SD et un signal de détection de réflectivité SD.

Comme on va le voir ci-après, ces signaux de détection SD permettent notamment de :

- a) mesurer une distance D séparant le véhicule équipé du système selon l'invention d'un obstacle et de mesurer sa réflectivité ;
- b) déterminer la présence d'un phénomène perturbateur de visibilité tel que des paquets d'eau (issus d'une route mouillée avec ou sans présence de pluie), et donc détecter la présence d'au moins une gerbe d'eau ; et
- c) déterminer la présence d'un phénomène perturbateur de visibilité avec la présence d'un obstacle tel qu'un véhicule suiveur.

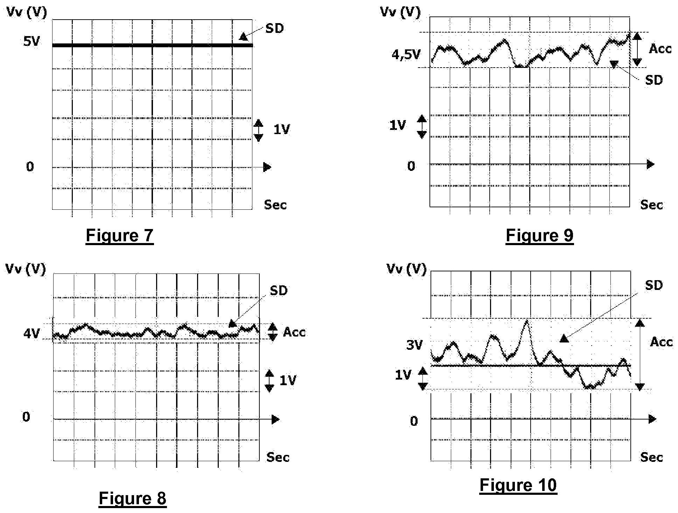

Des exemples non limitatifs de signaux de détection SD sont représentés aux Fig. 7 à 10 sur lesquelles l'abscisse représente les secondes, et l'ordonnée des Volts correspondant à la sortie du capteur CAPT.

La Fig. 7 montre un signal de détection de distance SD (correspondant au décalage de phase cité ci-dessus) à 5V (valeur par défaut du capteur CAPT) car il n'existe ni phénomène perturbateur ni obstacle solide.

Dans le premier cas (a), si l'obstacle est un véhicule suiveur V2 par exemple, le faisceau réfléchi FX1_R a été réfléchi sur ledit véhicule suiveur V2. Il a mis un certain temps pour être réfléchi.

Ce temps se retrouve dans le décalage de phase (appelé également temps de vol) observé entre le faisceau réfléchi FX1_R et le faisceau de référence FX2 qui n'a pas été réfléchi. Ce temps permet de définir la distance D séparant le capteur du véhicule suiveur V2. Le signal de détection SD est une droite continue.

Dans le deuxième cas (b), le faisceau est en partie au moins réfléchi par un phénomène perturbateur de visibilité tel que des paquets d'eau G1. Cette réflexion prend un certain temps pour être réfléchi. Ce temps se retrouve dans le décalage de phase observé entre le faisceau réfléchi FX1_R et le faisceau de référence FX2 qui n'a pas été réfléchi. Ce temps permet de définir la distance à laquelle se trouve le premier paquet d'eau (début de la gerbe d'eau) et donc de déterminer le début de la première gerbe d'eau, celle la plus proche du véhicule V1. La composante du signal continue SD permet d'observer cette distance.

De plus, étant donné que le faisceau est réfléchi FX1_R sur les différents paquets d'eau et du fait que ces paquets d'eau évoluent au cours du temps (se déplacent), on peut observer sur le signal de détection SD sur l'intervalle de temps déterminé T, une modulation de ce signal de détection. La composante alternative du signal de détection SD permet donc de voir cette modulation et de déterminer la présence d'une gerbe d'eau G1, comme on peut le voir sur les Fig. 9 et 10.

Dans le troisième cas (c), le faisceau se réfléchit à la fois sur l'obstacle solide et sur le phénomène perturbateur de visibilité. Le signal de détection distant SD résultant est une combinaison de l'information distance obstacle solide et distance phénomène perturbateur de visibilité et ne peut donc être considérée ni comme une mesure fiable de la distance de l'obstacle «solide» ni comme une mesure fiable de la distance du phénomène perturbateur de visibilité.

On notera que le fait de déterminer la distance D à laquelle se trouve un objet par rapport à un temps issu d'un décalage de phase entre deux signaux et d'obtenir une distance correspondante est bien connu de l'homme du métier et n'est donc pas décrit en détail ci-après.

Dans une troisième étape 3), on compare la modulation d'au moins un signal de détection généré SD avec une information de référence IR.

Dans un mode de réalisation non limitatif, l'information de référence IR est un seuil de modulation.

Dans une variante de réalisation non limitative, ce seuil de modulation est un seuil de modulation en amplitude. Ainsi, une comparaison entre la modulation en amplitude du signal de détection (correspondant à une valeur crête à crête de l'amplitude des oscillations du signal) et ce seuil de modulation en amplitude est facile à traiter car la modulation en amplitude d'un signal de détection SD peut être directement lue sur le signal lui-même sans traitement préalable particulier. Dans un exemple non limitatif, ce seuil de tension SU est fixé à 50mV. Au-delà de ce seuil de modulation SU, on en déduit la présence d'un phénomène perturbateur G1. Ce seuil de modulation permet de faire une différence par exemple entre la présence d'une gerbe d'eau gênante pour la visibilité, et l'absence d'une gerbe d'eau avec une atmosphère sèche ou humide mais non gênante pour la visibilité.

Les cas suivants sont illustrés sur les Fig. 7 à 10. On prend comme exemple non limitatif, un signal de détection de distance SD (correspondant au décalage de phase) et une information de référence IR correspondant à un seuil de modulation en amplitude.

Absence de phénomène perturbateur G1

Si le signal de détection SD est continu (ou avec des modulations inférieures au seuil SU), on peut conclure en l'absence de phénomène perturbateur de visibilité comme sur les Fig. 7 et 8.

Sans obstacle

De plus, si l'amplitude Vv du signal de détection SD est égale à une tension initiale Vi (ici 5 V), on peut conclure qu'il n'existe pas d'obstacle comme illustré à la Fig. 7.

Avec obstacle

Par contre, si son amplitude Vv est inférieure à la tension initiale Vi (ici 5V), on peut en déduire qu'il existe un obstacle solide et qu'il est à une certaine distance D selon la tension observée, comme illustré à la Fig. 8. Comme on peut le voir dans cette Fig. 8, l'amplitude moyenne observée est de 4V en moyenne. Dans un exemple non limitatif, 1V correspond à 1 mètre. On a donc un obstacle solide tel qu'un véhicule suiveur V2 à 4 mètres derrière le véhicule V1.
Dans l'exemple illustré, on peut également observer une légère modulation du signal SD. Cette modulation est inférieure au seuil de modulation déterminé SU de 50mV (dans l'exemple non limitatif pris). On est donc en présence d'une atmosphère humide mais sans présence de phénomène perturbateur de visibilité G1. On notera que dans le cas d'une atmosphère sèche, le signal de détection SD ne présenterait aucune modulation, mais serait une droite continue.

Présence d'un phénomène perturbateur

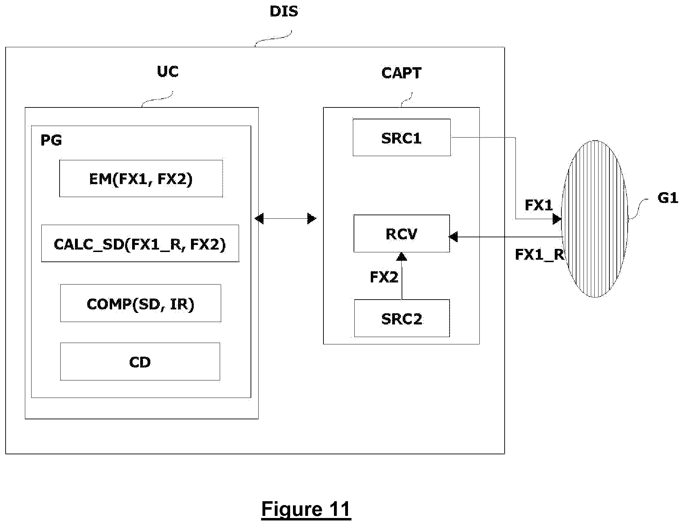

Si le signal de détection SD est modulé et la valeur crête à crête Acc de sa modulation supérieure au seuil de modulation déterminé SU, on peut conclure en la présence d'un phénomène perturbateur de visibilité.
Comme décrit ci-dessus, la composante continue de ce signal représente la distance du premier paquet d'eau derrière le véhicule V1. La composante alternative représente la modulation en amplitude du signal de détection SD.
Bien entendu, ce qui est expliqué ci-dessus concernant la comparaison avec une information de référence IR peut être également appliqué à un signal de détection de réflectivité SD (correspondant à un décalage d'amplitude).
Dans un autre mode de réalisation, on peut également combiner une comparaison d'une information de référence IR avec un signal de détection de distance SD, et une comparaison d'une information de référence IR un signal de détection de réflectivité SD.
Ainsi, grâce à l'observation de la modulation d'au moins un signal de détection SD, on peut détecter la présence d'un phénomène perturbateur G1 de visibilité tel qu'une gerbe d'eau à l'arrière du véhicule V1. Plus les modulations sont importantes, plus il existe de turbulences sur le chemin du faisceau et donc plus le phénomène perturbateur de visibilité est important.
De manière particulièrement avantageuse, on parvient ainsi à quantifier la baisse de visibilité.
Dans une quatrième étape 4), on adapte l'intensité du faisceau lumineux FX1 en fonction de l'importance de la baisse de visibilité qui a été quantifiée. La manière dont est déterminée cette surintensification a été décrite précédemment. Cette surintensification permet de compenser l'absorption du flux lumineux afin de conserver une distance de détection constante tout en respectant les normes de sécurité oculaire.
Dans une cinquième étape 5), après qu'un phénomène perturbateur G1 est détecté, un traitement adéquat CD en temps réel sur le véhicule V peut être exécuté.
Dans des exemples non limitatifs, il peut s'agir par exemple d'envoyer un signal d'alerte au conducteur du véhicule ou de déclencher un système d'assistance au freinage.
On notera que cette cinquième étape se fait au fur et à mesure de la détection de la présence d'un phénomène perturbateur G1 par le procédé décrit ci-dessus.
Ainsi, grâce au procédé décrit ci-dessus, on conserve une distance de détection d'obstacle constante quelle que soit l'importance de phénomènes perturbateurs de visibilité.
Le procédé de l'invention est mis en oeuvre par un dispositif DISP de détection représenté à la Fig. 11.
Ce dispositif DISP comporte notamment :

- une source lumineuse émettrice SRC1 d'un faisceau lumineux FX1 pour éclairer la zone à surveiller, le faisceau lumineux pouvant être réfléchi par un obstacle et/ou par un phénomène perturbateur de visibilité; et
- une unité de contrôle UC pour :

  ◦ générer au moins un signal de détection SD en fonction d'une combinaison du faisceau lumineux réfléchi FX1_R en cas d'obstacle ou de phénomène perturbateur de visibilité et d'un faisceau de référence FX2 ;

∘ comparer la modulation d'au moins un signal de détection SD généré avec une information de référence IR.

Le dispositif DISP comporte en outre :

- une deuxième source lumineuse émettrice SRC2 d'un faisceau lumineux de référence FX2 ;
- un récepteur RCV pour recevoir :

∘ le faisceau lumineux réfléchi FX1_R résultant de la réflexion du faisceau lumineux FX1 sur un obstacle ou un phénomène perturbateur de visibilité, et
∘ le faisceau lumineux de référence FX2 directement envoyé sur son entrée (sans réflexion sur un obstacle ou un phénomène perturbateur de visibilité).

L'ensemble première source lumineuse SRC1, deuxième source lumineuse SRC2 et récepteur RCV forme un capteur CAPT.

L'unité de contrôle UC permet en outre de :

- commander la première source lumineuse SRC1 ;
- commander la deuxième source lumineuse SRC2 ;
- commander le récepteur RCV ;
- effectuer la comparaison entre la modulation d'au moins un signal de détection SD et de l'information de référence IR,
- ajuster l'intensité du flux lumineux en fonction de la baisse de visibilité détectée.

Les éléments du dispositif DISP sont décrits en détail ci-après.

La première source lumineuse SRC1 (dite source émettrice).

La source lumineuse SRC1 est une diode de type LED. Dans d'autres modes non limitatifs, on peut avoir des diodes laser, OLED, lampe halogène avec concentrateur de lumière etc., toute source capable d'émettre un faisceau lumineux FX1 tel que décrit auparavant. On rappelle qu'une diode transforme le courant électrique en photons de lumière.

Cette source permet d'émettre le faisceau lumineux FX1 à savoir elle émet des pulses de lumière à une certaine fréquence.

De plus la source SRC1 est choisie pour émettre un faisceau FX1 d'une certaine portée. On prendra dans un exemple non limitatif une portée entre 5 et 20 mètres.

Dans un mode de réalisation non limitatif, elle permet d'émettre un faisceau à une fréquence comprise entre 200 et 500kHz. Cela permet d'avoir des sources lumineuses standard et à bas coût.

De par sa taille (de l'ordre du cm3), la source lumineuse SRC1 infrarouge est facile à intégrer dans un rétroviseur latéral, une portière ou un feu de véhicule.

Le récepteur RCV.

Dans un mode de réalisation non limitatif, le récepteur est une photodiode. Le récepteur dépend de la longueur d'onde du faisceau lumineux FX utilisée.

Dans un autre exemple non limitatif, le récepteur peut être un récepteur InGaAS si on émet un faisceau lumineux FX de longueur d'onde InGaAS. Cela permet d'émettre dans une bande de fréquences moins nocive pour l'oeil humain que les infrarouges, et d'augmenter la puissance optique de sorte à effectuer une détection plus lointaine.

L'intérêt d'utiliser une photodiode est d'obtenir un capteur CAPT bas coût. On rappelle qu'une photodiode transforme les photons de la lumière reçue en courant électrique.

Ce récepteur permet de recevoir le faisceau lumineux réfléchi FX1_R, et recevoir le faisceau de référence FX2.

Le récepteur RCV est placé dans le chemin de retour du pulse de lumière envoyé (ou encore de la lumière émise). Il est donc placé de sorte à être éclairé par le faisceau réfléchi FX1_R.

Dans un mode de réalisation non limitatif, le récepteur RCV est placé près de la source émettrice SRC1 pour permettre d'avoir plus de signal retour perçu du faisceau lumineux FX1. De plus, cela permet d'avoir un meilleur gain en efficacité et une simplicité de gestion de l'électronique du récepteur.

On rappelle que le faisceau lumineux réfléchi FX1_R est composé de pulses qui ont été réfléchis par tout obstacle (véhicule, mur, piéton, trottoir etc....) et / ou par tout phénomène perturbateur de visibilité (eau, brouillard etc.) et qui sont revenus ensuite en direction de l'émetteur SRC1 et du récepteur RCV, déformés et déphasés.

<u>La deuxième source lumineuse SRC2 (dite source compensatrice).</u>

La source lumineuse SRC2 est une diode dite compensatrice de type LED. Dans d'autres modes non limitatifs, on peut avoir des diodes laser, OLED, lampe halogène avec concentrateur de lumière etc., toute source capable d'émettre un faisceau lumineux de référence FX2 tel que décrit auparavant.

Cette source permet d'émettre le faisceau lumineux de référence FX2 qui est du même type que le faisceau lumineux FX1 au départ (infrarouge, même fréquence).

La source lumineuse compensatrice SRC2 vient éclairer en permanence le récepteur RCV. Elle émet donc à l'allumage du capteur CAPT les mêmes pulses de lumière que la première source lumineuse SRC1 mais les envoie directement (donc sans passage d'obstacle) vers le récepteur.

Dans un mode de réalisation non limitatif, elle est placée non loin du récepteur RCV pour simplifier le chemin optique à parcourir.

<u>Le capteur CAPT</u>

Ainsi, ces trois composants SRC1, SRC2 et RCV forment un capteur CAPT. Ce capteur CAPT prend peu de place (inférieur à la taille d'un paquet de cigarettes) lorsque ces trois composants sont placés l'un à côté de l'autre.

On notera qu'on peut également avoir un unique composant pour faire la fonction d'émetteur et récepteur. On fera par exemple fonctionner une diode (donc émettrice) en photodiode (donc réceptrice) et on alternera le fonctionnement mais cette solution est plus compliquée à gérer et augmente le coût du capteur CAPT.

Par ailleurs, comme décrit précédemment, on choisit le capteur CAPT de sorte que son temps de réaction (appelé encore résolution temporelle) soit inférieur à la vitesse d'évolution des paquets d'eau en cas d'écume ou de pluie ou soit inférieur à la vitesse d'évolution des flocons de neige, de manière à pouvoir observer une variation de signal représentative des évolutions de ces paquets et donc la modulation d'un signal de détection SD.

On notera que la vitesse d'évolution des paquets est la durée caractéristique de déplacement de ces paquets dans le voisinage du véhicule (les paquets d'eau montent et descendent avec une certaine vitesse dans le cas de l'écume).

Le capteur CAPT est capable de discriminer deux pulses de lumière.

<u>L'unité de contrôle UC.</u>

Elle permet de commander l'émission de la source compensatrice SRC2 de manière à faire varier le faisceau de référence FX2 (notamment par un décalage de phase et un décalage d'amplitude) par rapport au faisceau lumineux réfléchi FX1_R jusqu'à obtenir, en le sommant avec le faisceau lumineux réfléchi FX1_R un signal nul. Cette unité UC permet de mesurer le décalage de phase et le décalage d'amplitude et ainsi d'obtenir les signaux de détection SD décrit précédemment (de distance et de réflectivité).

Une telle unité UC permettant d'effectuer un décalage de signaux est connue de l'homme du métier et est simple à mettre en oeuvre car elle permet l'ajustement de deux signaux (compensatrice et émettrice) de manière à annuler les deux faisceaux FX1_R et FX2 en effectuant uniquement un décalage de signaux comme décrit ci-dessus.

Avantageusement, l'unité de contrôle UC intègre également des moyens de commande agencés pour adapter la puissance du faisceau lumineux FX1 émis par la première source SRC1.

De préférence, l'UC commande également les actions prévues en cas de détection d'une baisse de visibilité (signal adressé au conducteur, freinage anticipé etc.)

Aucune mesure des temps très courts inférieurs à 100ns (équivalent environ au temps de vol d'un pulse de lumière) par évaluation du temps de vol d'un pulse de lumière entre son émetteur et son récepteur n'est nécessaire. En conséquence, aucune électronique de haute qualité (équivalente à du matériel militaire) difficilement compatible avec les coûts autorisés en automobile n'est nécessaire.

On notera que la mise en oeuvre du procédé de détection exposé ci-dessus peut être effectuée au moyen d'un dispositif micro programmé « software », d'une logique câblée, ou encore de composants électroniques « hardware ».

Ainsi, le dispositif de détection DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH par exemple. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 11, le programme d'ordinateur PG est inscrit dans une mémoire de l'unité de contrôle UC.

Bien entendu, la description du procédé n'est pas limitée aux modes de réalisation et exemples décrits. Ainsi, dans un mode de réalisation non limitatif, on peut également effectuer dans la troisième étape 3), une comparaison de la modulation d'au moins un signal de détection SD avec une information de référence IR qui est un seuil de modulation en fréquence. On prend ainsi en compte la modulation en fréquence d'un signal de détection SD.

Dans un autre mode de réalisation, on peut également imaginer une combinaison d'une telle comparaison (avec un seuil de modulation en fréquence) avec une comparaison avec un seuil de modulation en amplitude tel que décrit précédemment.

Ainsi, lorsque les obstacles sont présents par visibilité réduite, l'invention, en combinant sur un même capteur deux fonctions, permet de conserver une distance de détection satisfaisante malgré cette réduction de visibilité et de respecter les normes de sécurité oculaire.

Elle permet d'obtenir un capteur bas coût (notamment par l'utilisation de la photodiode et du fait du procédé de détection simple).

C'est une solution simple à mettre en oeuvre du fait de la combinaison (sommation et décalage de phase et d'amplitude) simple à effectuer ;

Le décalage de phase et le décalage d'amplitude étant simple à mettre en oeuvre, il permet d'utiliser un capteur à des fréquences standard (200-500kHz).

Elle permet la détection d'une atmosphère humide non gênante pour la visibilité grâce au seuil de tension SU.

Elle permet de ne pas prendre en compte des contraintes métrologiques (mesure des temps très courts du temps de vol d'un pulse lumineux). Ainsi, aucune électronique ou unité de contrôle complexe n'est nécessaire. Seuls des composants standards peuvent être utilisés.

Elle permet d'utiliser un dispositif qui prend peu de place du fait de sa simplicité de mise en oeuvre.

Un second exemple non limitatif de système de détection et de quantification d'un phénomène perturbateur de visibilité va maintenant être détaillé. Ce second exemple s'applique de préférence aux phénomènes perturbateurs homogènes tels que le brouillard, la fumée etc.

Dans ce second exemple, la détection et la quantification du phénomène perturbateur sont effectuées conformément au système décrit dans le brevet français numéro FR1483404.

D'une manière générale, cette détection du phénomène perturbateur repose sur la détermination de la réflectivité du milieu par analyse de la quantité de lumière émise par le capteur et rétro diffusée par le milieu.

Lorsque le capteur détecte une part très significative de lumière rétro diffusée, il en déduit la présence d'un obstacle « dur » tel qu'un véhicule, un piéton ou un obstacle. Le capteur peut alors calculer la distance à laquelle se situe cet obstacle.

Lorsque le capteur détecte une part nulle ou très faible de lumière rétro diffusée, il en déduit l'absence d'un obstacle « dur » et l'absence d'un phénomène perturbateur de visibilité.

Lorsque le capteur détecte de la lumière rétro diffusée en quantité comprise dans un intervalle prédéterminé, il en déduit l'absence d'un obstacle « dur » et la présence d'un phénomène perturbateur de visibilité.

Le document FR1483404 décrit de manière détaillée la détection et la quantification du phénomène perturbateur par analyse du coefficient de diffusion.

Les caractéristiques de ce second exemple de système de détection et de quantification d'un phénomène perturbateur de visibilité peuvent être combinées aux caractéristiques générales du capteur présenté précédemment.

REFERENCES

1. Véhicule équipé d'un système selon l'invention
2. Véhicule présent dans une zone de surveillance
3. Faisceau
4. Zone non couverte
5. Portée du faisceau surintensifié

**Revendications**

**1.** Système de détection d'obstacle pour véhicule (1, DIS) comprenant:

- des moyens d'émission (SRC1) d'un faisceau (3, FX1) lumineux,
- des premiers moyens de détection, agencés pour recevoir par réflexion une partie au moins du faisceau (3, FX1_R) de sorte à détecter la présence d'un obstacle (2) rencontré par le faisceau (3, FX1),
- des seconds moyens de détection, agencés pour détecter et quantifier une baisse de visibilité dans l'environnement du véhicule (1),

**caractérisé en ce qu'**il comprend

- des moyens de commande (UC) configurés pour adapter la puissance dudit faisceau (3) en fonction de la baisse de visibilité,

et au moins un même capteur (CAPT) comprenant les premiers et les seconds moyens de détection, les seconds moyens de détection étant agencés pour détecter et quantifier ladite baisse de visibilité par analyse de ladite partie au moins du faisceau reçue par réflexion (3, FX1_R), et
dans lequel :

- les moyens d'émission (SRC1) comprennent au moins une source lumineuse,
- le système (1, DIS) est agencé pour augmenter le flux lumineux en provenance de la source lorsqu'une baisse de visibilité est détectée par les seconds moyens de détection, et
- le flux lumineux est augmenté par les moyens de commande (UC) par rapport à une utilisation par bonne visibilité, de manière à ne pas dépasser un seuil de sécurité oculaire.

2. Système selon la revendication 1, dans lequel les premiers et les seconds moyens de détection forment un seul et même moyen de réception du faisceau (3).

3. Système selon la revendication précédente dans lequel le faisceau (3) lumineux présente une longueur d'onde comprise entre 780 et 1100 nanomètres.

4. Système selon l'une quelconque des revendications précédentes dans lequel les moyens d'émission (SRC1) du faisceau (3) comprennent au moins une diode électroluminescente.

5. Système selon l'une quelconque des revendications précédentes dans lequel les moyens d'émission (SRC1) sont intégrés au capteur (CAPT).

6. Système selon l'une quelconque des revendications précédentes dans lequel les seconds moyens de détection sont agencés pour détecter une baisse de visibilité en présence de perturbations atmosphériques ou de brouillard ou de pluie ou de chute de neige ou de fumées ou de projections d'eau.

7. Système selon l'une quelconque des revendications précédentes dans lequel les moyens d'émission comprennent au moins une source lumineuse et agencé pour diminuer le rapport cyclique d'émission de la source de sorte à émettre un flux au dessus de la limite d'émission en continu de la source ponctuellement lorsqu'une baisse de visibilité est détectée par les seconds moyens de détection.

8. Système selon l'une quelconque des revendications précédentes dans lequel les moyens de commande définissent pour le faisceau (3) une luminance émise $L_{Emax}$ de sorte que

$$L_{Emax} = \frac{K_{es}}{C_a \cdot t^A} \cdot (1 - e^{-k \cdot \frac{de}{V}})$$

avec :

- de = distance séparant un oeil des moyens d'émission
- t = temps de réponse du système
- $C_a$ = angle apparent de la source
- $K_{es}$ = constante issue de normes de sécurité pour garantir l'intégrité des yeux
- k = coefficient de Koschmieder
- A = constante issue des normes de sécurité oculaire
- V = distance de visibilité

9. Système selon l'une quelconque des revendications précédentes comportant une unité de contrôle (UC) agencée pour générer au moins un signal de détection (SD) en fonction d'une combinaison du faisceau (3) lumineux réfléchi (FX1_R) en cas d'obstacle et d'un faisceau (3) de référence (FX2) et pour comparer la modulation d'au moins un signal de détection généré (SD) avec une information de référence (IR)

**Patentansprüche**

1. Hinderniserkennungssystem für Fahrzeug (1, DIS), umfassend:

   - Mittel (SRC1) zum Aussenden eines Lichtstrahlenbündels (3, FX1),
   - erste Erkennungsmittel, die angeordnet sind, um durch Reflexion mindestens einen Teil des Bündels (3, FX1_R) derart zu empfangen, um die Anwesenheit eines Hindernisses (2) zu erkennen, auf das das Bündel (3, FX1) trifft,
   - zweite Erkennungsmittel, die angeordnet sind, um ein Abnehmen der Sichtbarkeit in der Umgebung des Fahrzeugs (1) zu erkennen und zu quantifizieren,

   **dadurch gekennzeichnet, dass** es Folgendes aufweist:

   - Steuerungsmittel (UC), die konfiguriert sind, um die Leistung des Bündels (3) in Abhängigkeit von dem Abnehmen der Sichtbarkeit anzupassen,

   und mindestens einen gleichen Sensor (CAPT), der erste und zweite Erkennungsmittel aufweist, wobei die zweiten Erkennungsmittel angeordnet sind, um das Abnehmen der Sichtbarkeit durch Analyse mindestens des Teils des Bündels (3, FX1_R), der durch Reflexion erhalten ist, zu erkennen und zu quantifizieren, und wobei:

   - die Mittel zum Aussenden (SRC1) mindestens eine Lichtquelle aufweisen,
   - das System (1, DIS) angeordnet ist, um den Lichtstrom von der Quelle zu erhöhen, wenn ein Abnehmen der Sichtbarkeit von den zweiten Erkennungsmitteln erkannt wird, und
   - der Lichtstrom durch die Steuerungsmittel (UC) gegenüber einer Verwendung bei guter Sichtbarkeit derart erhöht wird, um einen Schwellenwert der Augensicherheit nicht zu überschreiten.

2. System nach Anspruch 1, wobei die ersten und zweiten Erkennungsmittel ein und dasselbe Mittel zum Empfangen des Bündels (3) bilden.

3. System nach dem vorhergehenden Anspruch, wobei das Lichtstrahlenbündel (3) eine Wellenlänge zwischen 780 und 1.100 Nanometer aufweist.

4. System nach einem der vorhergehenden Ansprüche, wobei die Mittel zum Aussenden (SRC1) des Bündels (3) mindestens eine lichtemittierende Diode aufweisen.

5. System nach einem der vorhergehenden Ansprüche, wobei die Mittel zum Aussenden (SRC1) in den Sensor (CAPT) integriert sind.

6. System nach einem der vorhergehenden Ansprüche, wobei die zweiten Erkennungsmittel angeordnet sind, um ein Abnehmen der Sichtbarkeit in Anwesenheit von atmosphärischen Störungen oder von Nebel oder von Regen oder von Schneefall oder von Rauch oder von Wasserspritzern zu erkennen.

7. System nach einem der vorhergehenden Ansprüche, wobei die Mittel zum Aussenden mindestens eine Lichtquelle aufweisen und das angeordnet ist, um das zyklische Verhältnis des Aussendens der Quelle derart zu verringern, um einen Strom über der Grenze des kontinuierlichen Aussendens der Quelle punktuell auszusenden, wenn ein Abnehmen der Sichtbarkeit von den zweiten Erkennungsmitteln erkannt wird.

8. System nach einem der vorhergehenden Ansprüche, wobei die Steuerungsmittel für das Bündel (3) eine ausgesendete Leuchtdichte $L_{Emax}$ derart definieren, dass

$$L_{Emax} = \frac{K_{es}}{C_a \cdot t^A} \cdot (1 - e^{-k \cdot \frac{de}{V}})$$

mit:

- de = Abstand, der ein Auge von den Mitteln zum Aussenden trennt,
- t = Ansprechzeit des Systems
- $C_a$ = scheinbarer Winkel der Quelle
- $K_{es}$ = Konstante, die aus den Sicherheitsstandards hervorgegangen ist, um die Unversehrtheit der Augen zu gewährleisten
- k = Koschmieder-Koeffizient
- A = Konstante, die aus den Augensicherheitsstandards hervorgegangen ist
- V = Sichtweite

**9.** System nach einem der vorhergehenden Ansprüche, umfassend eine Steuereinheit (UC), die angeordnet ist, um mindestens ein Erkennungssignal (SD) in Abhängigkeit von einer Kombination des reflektierten Lichtstrahlenbündels (3) (FX1_R) im Falle eines Hindernisses und eines Bündels (3) zur Referenz (FX2) zu erzeugen und um die Modulation von mindestens einem erzeugten Erkennungssignal (SD) mit einer Referenzinformation (IR) zu vergleichen.

**Claims**

**1.** Obstacle detection system for a vehicle (1, DIS) comprising:

- means (SRC1) for emitting a light beam (3, FX1),
- first detection means, arranged to receive, by reflection, at least a part of the beam (3, FX1_R) so as to detect the presence of an obstacle (2) encountered by the beam (3, FX1),
- second detection means, arranged to detect and quantify a lowering of visibility in the environment of the vehicle (1),

**characterized in that** it comprises

- control means (UC) configured to adapt the power of said beam (3) according to the lowering of visibility,

and at least one same sensor (CAPT) comprising the first and the second detection means, the second detection means being arranged to detect and quantify said lowering of visibility by analysing said at least part of the beam received by reflection (3, FX1_R), and in which:

- the emission means (SRC1) comprise at least one light source,
- the system (1, DIS) is arranged to increase the light flux originating from the source when a lowering of visibility is detected by the second detection means, and
- the light flux is increased by the control means (UC) relative to use in good visibility, so as not to exceed an ocular safety threshold.

**2.** System according to Claim 1, in which the first and the second detection means form one and the same beam (3) reception means.

**3.** System according to the preceding claim, in which the light beam (3) exhibits a wavelength of between 780 and 1100 nanometres.

**4.** System according to any one of the preceding claims, in which the beam (3) emission means (SRC1) comprise at least one light-emitting diode.

**5.** System according to any one of the preceding claims, in which the emission means (SRC1) are incorporated in the sensor (CAPT).

6.  System according to any one of the preceding claims, in which the second detection means are arranged to detect a lowering of visibility in the presence of atmospheric disturbance or of fog or of rain or of falling snow or of smoke or of sprayed water.

7.  System according to any one of the preceding claims, in which the emission means comprise at least one light source and arranged to reduce the emission duty cycle of the source so as to emit a flux above the continuous emission limit of the source on a one-off basis when a lowering of visibility is detected by the second detection means.

8.  System according to any one of the preceding claims, in which the control means define, for the beam (3), an emitted luminance $L_{Emax}$ such that

$$L_{Emax} = \frac{K_{es}}{C_a \cdot t^A} \cdot (1 - e^{-k \cdot \frac{de}{V}})$$

with:

- de = distance separating an eye from the emission means
- t = system response time
- $C_a$ = apparent angle of the source
- $K_{es}$ = constant derived from safety standards to guarantee the integrity of the eyes
- k = Koschmieder coefficient
- A = constant derived from ocular safety standards
- V = visibility distance

9.  System according to any one of the preceding claims comprising a control unit (UC) arranged to generate at least one detection signal (SD) as a function of a combination of the light beam (3) reflected (FX1_R) in case of obstacle and of a beam (3) of reference (FX2) and to compare the modulation of at least one detection signal (SD) generated with reference information (IR).

**Figure 1**

**Figure 2**

**Figure 3**

**Figure 4**

```
┌─────────────────────────────────────────┐
│                                         │
│              EM(FX1)                    │
│                                         │
└─────────────────────────────────────────┘
                    │
                    ▼
┌─────────────────────────────────────────┐
│                                         │
│         CALC_SD (FX1_R, FX2)            │
│                                         │
└─────────────────────────────────────────┘
                    │
                    ▼
┌─────────────────────────────────────────┐
│                                         │
│            COMP(SD, IR)                 │
│                                         │
└─────────────────────────────────────────┘
                    │
                    ▼
┌─────────────────────────────────────────┐
│                                         │
│                 CD                      │
│                                         │
└─────────────────────────────────────────┘
```

Figure 5

**Figure 6**

**Figure 7**

**Figure 8**

**Figure 9**

**Figure 10**

DIS

UC

CAPT

PG

EM(FX1, FX2)

CALC_SD(FX1_R, FX2)

COMP(SD, IR)

CD

SRC1

RCV

FX2

SRC2

FX1

FX1_R

G1

**Figure 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008154736 A
- EP 1859990 A
- US 2005180149 A
- US 2009032712 A
- WO 2007071032 A
- EP 2085790 A
- FR 1483404